# EUROPEAN PATENT APPLICATION

(11) **EP 2 789 653 A1**
(43) Date of publication of application: **15.10.2014**
(21) Application number: 12856274.1
(22) Date of filing: 22.11.2012
(51) Int. Cl.: C08L 23/02, C08K 3/22, C08K 5/52, C08L 27/18

(54) **FLAME RETARDANT POLYOLEFIN RESIN COMPOSITION**

(30) Priority: 06.12.2011 JP 2011267220
(71) Applicant: Adeka Corporation, Tokyo 116-8554 (JP)
(72) Inventor: HATANAKA, Tomoyuki, Saitama-shi Saitama 336-0022 (JP); IWASAKI, Yusuke, Saitama-shi Saitama 336-0022 (JP); YAMAZAKI, Kenji, Saitama-shi Saitama 336-0022 (JP)
(74) Representative: Forstmeyer, Dietmar
(86) International application number: PCT/JP2012/080265
(87) International publication number: WO 2013/084725

(57) **Abstract**

The present invention provides a flame retardant polyolefin resin composition using no halogen-based flame retardant that discharges a harmful gas on combustion and satisfying the UL94 5VA standard, and specifically a flame retardant polyolefin resin composition containing (A) a (poly)phosphate compound represented by general formula (1), (B) a (poly)phosphate compound represented by general formula (3) as flame retardants for a polyolefin resin, and preferably (C) zinc oxide and (D) an anti-drip agent, and satisfying the UL94 5VA standard. The concrete contents of the general formulae (1) and (3) are as described in the specification.

## Description

### TECHNICAL FIELD

The present invention relates to a flame retardant polyolefin resin composition and particularly to a flame retardant polyolefin resin composition that conforms to UL94 5VA, which is the UL standard for flame retardancy.

### BACKGROUND ART

Polyolefin resins are advantageous in being excellent in molding processability, dynamic properties, low specific gravity, and the like and therefore have been used widely as inexpensive general purpose resins and in the form of a molded article for such applications as machines, electric and electronic equipment, OA equipment automobile interior or exterior materials, and electric motorcars. Of these products, regarding electric and electronic equipment, and OA equipment, and the like, molded articles are required to have high flame retardancy especially in the case that the articles are used as housings (frames, bodies, exteriors, covers, etc.) or components of such products.

Specifically, conformity with the UL standard of Underwritters Laboratories is required, and conformity with, especially, the UL94 5VA standard has recently been required mainly for large mobile equipment, large stationary equipment, equipment using high voltage, and the like.

As to molded articles of self-extinguishing resins such as polycarbonate resin, those satisfying the UL94 5VA standard have heretofore been proposed (see Patent Literature 1 and 2).

However, conventionally polyolefin resins are difficult to conform to the UL94 5VA standard, and even if this standard is satisfied, there has been a problem that a halogen-based flame retardant that discharges a harmful gas on combustion has to be used. Moreover, depending on the loading of the flame retardant, there has been a problem that inherent physical properties of resin are adversely affected.

### CITATION LIST

### PATENT LITERATURE

Patent Literature 1: JP 9-12859 A
Patent Literature 2: U.S. Pat. No. 6838502 specification

### SUMMARY OF INVENTION

### TECHNICAL PROBLEM

Accordingly, the present invention relates to a flame retardant polyolefin resin composition using no halogen-based flame retardant that discharges a harmful gas on combustion and satisfying the UL94 5VA standard.

### SOLUTION TO PROBLEM

The present inventor researched earnestly in order to solve the above-described problems and have accomplished the present invention.

Namely, the present invention, a flame retardant polyolefin resin composition containing the following components (A) and (B) as flame retardant components for a polyolefin resin and satisfying the UL94 5VA standard,
a component (A): a (poly)phosphate compound represented by the following general formula (1)
a component (B): a (poly)phosphate compound represented by the following general formula (3). 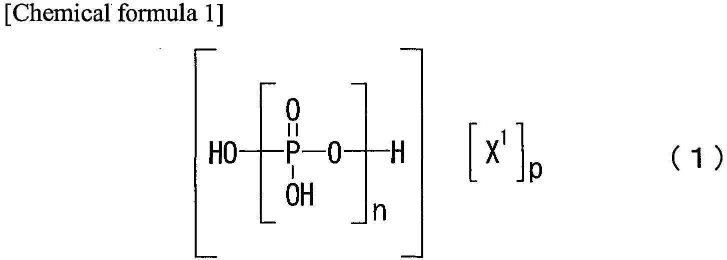 wherein n represents a number of 1 to 100, X¹ represents ammonia or a triazine derivative represented by the following general formula (2), and p represents a number satisfying 0 < p ≤ n + 2, 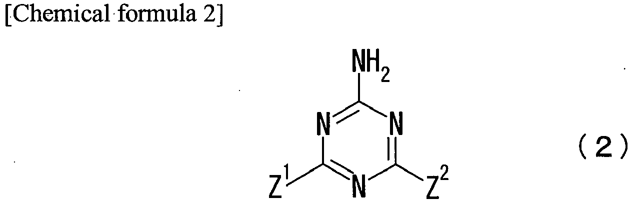 wherein Z¹ and Z² may be either the same or different and are each a group selected from the group consisting of an -NR⁵R⁶ group [wherein R⁵ and R⁶ may be either the same or different and are each a hydrogen atom, a linear or branched alkyl group having 1 to 6 carbon atoms, or a methylol group], a hydroxyl group, a mercapto group, a linear or branched alkyl group having 1 to 10 carbon atoms, a linear or branched alkoxy group having 1 to 10 carbon atoms, a phenyl group, and a vinyl group, 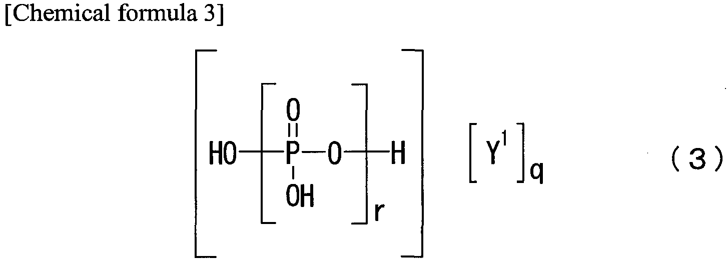 wherein r represents a number of 1 to 100, Y¹ represents [R¹R²N(CH₂)ₘNR³R⁴], piperazine, or a diamine having a piperazine ring, wherein R¹, R², R³, and R⁴ each represent a hydrogen atom or a linear or branched alkyl group having 1 to 5 carbon atoms and R¹, R², R³, and R⁴ may be either the same or different, m represents an integer of 1 to 10, and q represents a number satisfying 0 < q ≤ r + 2.

The present invention also provides the above-mentioned flame retardant polyolefin resin composition, wherein the total content of the components (A) and (B) is 15 to 50% by mass.

The present invention also provides the above-mentioned flame retardant polyolefin resin composition further containing zinc oxide as a component (C).

The present invention also provides the above-mentioned flame retardant polyolefin resin composition further containing an anti-drip agent as a component (D).

The present invention also provides the above-mentioned flame retardant polyolefin resin composition, wherein the component (D) is polytetrafluoroethylene.

The present invention also provides the above-mentioned flame retardant polyolefin resin composition using as the component (A) a melamine pyrophosphate of the general formula (1) wherein n is 2, p is 2, and X¹ is a melamine of the general formula (2) wherein Z¹ and Z² are each -NH₂.

The present invention also provides the above-mentioned flame retardant polyolefin resin composition using as the component (B) a piperazine polyphosphate of the general formula (3) wherein q is 1 and Y¹ is piperazine.

The present invention also provides the above-mentioned flame retardant polyolefin resin composition wherein the piperazine polyphosphate is a piperazine pyrophosphate.

The present invention also provides the above-mentioned flame retardant polyolefin resin composition satisfying the UL94 5VA standard at a thickness of 3.2 mm or less.

The present invention also provides the above-mentioned flame retardant polyolefin resin composition satisfying the UL94 5VA standard at a thickness of 1.6 mm or less.

The present invention also provides a housing or component of electric motorcars, machines, and electric and electronic equipment obtained from the flame retardant polyolefin resin composition.

### ADVANTAGEOUS EFFECTS OF INVENTION

According to the present invention, it is possible to provide a flame retardant polyolefin resin composition that discharges no harmful gas on combustion and satisfies the UL94 5VA standard.

### DESCRIPTION OF EMBODIMENTS

The flame retardant polyolefin resin composition of the present invention is described in detail below on the basis of preferred embodiments.

First, the polyolefin resin to be used for the flame retardant polyolefin resin composition of the present invention is described.

Examples of the polyolefin resin to be used for the flame retardant polyolefin resin composition of the present invention include α-olefin polymers such as low density polyethylene, linear low density polyethylene, high density polyethylene, isotactic polypropylene, syndiotactic polypropylene, hemiisotactic polypropylene, polybutene, cycloolefin polymers, stereoblock polypropylene, poly-3-methyl-1-butene, poly-3-methyl-1-pentene, and poly-4-methyl-1-pentene, and α-olefin copolymers such as ethylene/propylene block or random copolymers, ethylene-methyl methacrylate copolymers, and ethylene-vinyl acetate copolymers.

In the present invention, a mixture of a propylene-based polymer, such as polypropylene, an ethylene/propylene block or random copolymer, an α-olefin other than ethylene/propylene block or random copolymer and another α-olefin polymer may be used as the polyolefin resin.

As the polyolefin resin, polypropylene is preferably used from the viewpoint of flame retardancy.

Next, the component (A) to be used for the flame retardant polyolefin resin composition of the present invention is described.

The (poly)phosphate compound represented by the general formula (1) to be used as the component (A) in the flame retardant polyolefin resin composition of the present invention is a salt of phosphoric acid with ammonia or a triazine derivative represented by the general formula (2).

Examples of the linear or branched alkyl group having 1 to 10 carbon atoms represented by Z¹ and Z² in the general formula (2) include methyl, ethyl, propyl, isopropyl, butyl, sec-butyl, tert-butyl, isobutyl, amyl, isoamyl, tert-amyl, hexyl, cyclohexyl, heptyl, isoheptyl, tert-heptyl, n-octyl, isooctyl, tert-octyl, 2-ethylhexyl, nonyl, and decyl, and examples of the linear or branched alkoxy group having 1 to 10 carbon atoms include groups derived from these alkyl groups. Examples of the linear or branched alkyl group having 1 to 6 carbon atoms represented by R⁵ and R⁶ in the -NR⁵R⁶ group that may be represented by Z¹ and Z² include alkyl groups having 1 to 6 carbon atoms of the above-listed alkyl groups.

Specific examples of the triazine derivative include melamine, acetoguanamine, benzoguanamine, acrylguanamine, 2,4-diamino-6-nonyl-1,3,5-triazine, 2,4-diamino-6-hydroxy-1,3,5-triazine, 2-amino-4,6-dihydroxy-1,3,5-triazine, 2,4-diamino-6-methoxy-1,3,5-triazine, 2,4-diamino-6-ethoxy-1,3,5-triazine, 2,4-diamino-6-propoxy-1,3,5-triazine, 2,4-diamino-6-isopropoxy-1,3,5-triazine, 2,4-diamino-6-mercapto-1,3,5-triazine, and 2-amino-4,6-dimercapto-1,3,5-triazine.

Of the (poly)phosphate compounds represented by the general formula (1), a salt of (poly)phosphoric acid with melamine or an ammonium (poly)phosphate compound is preferably used as the component (A).

Examples of the salt of (poly)phosphoric acid with melamine include melamine orthophosphate, melamine pyrophosphate, and melamine polyphosphate, and of these, melamine pyrophosphate, represented by the general formula (1) in which n is 2, p is 2, and X¹ is melamine, is particularly preferred from the viewpoint of flame retardancy. The salt of (poly)phosphoric acid with melamine, e.g., in the case of melamine pyrophosphate, can be obtained by reacting sodium pyrophosphate with melamine in an arbitrary reaction ratio with the addition of hydrochloric acid, followed by neutralization with sodium hydroxide.

The ammonium (poly)phosphate compound is isolated ammonium (poly)phosphate or a compound including ammonium (poly)phosphate as the main component. As the isolated ammonium (poly)phosphate, there can be used commercial products such as Exolit-422 and Exolit-700 produced by Clariant International Ltd., Phos-Chek-P/30 and Phos-Chek-P/40 produced by Monsanto Company, SUMISAFE-P produced by Sumitomo Chemical Co., Ltd., and TERRAJU-S10 and TERRAJU-S20 produced by Chisso Corporation.

Examples of the compound including ammonium (poly)phosphate as the main component include ammonium (poly)phosphate that is coated or microencapsulated with a thermosetting resin, ammonium (poly)phosphate whose surface is coated with a melamine monomer, a nitrogen-containing organic compound, or the like, ammonium (poly)phosphate treated with a surfactant or silicone, and ammonium (poly)phosphate that has been desolubilized by the addition of melamine or the like during the production thereof. Examples of the commercial products of such compounds include Exolit-462 produced by Clariant International Ltd., SUMISAFE PM produced by Sumitomo Chemical Co., Ltd., and TERRAJU-C60, TERRAJU-C70 and TERRAJU-C80 produced by Chisso Corporation.

Next, the-component (B) to be used for the flame retardant polyolefin resin composition of the present invention is described. The (poly)phosphate compound represented by the general formula (3) to be used as the component (B) in the flame retardant polyolefin resin composition of the present invention is a salt of (poly)phosphoric acid with a diamine represented by Y¹. The diamine represented by Y¹ is R¹R²N(CH₂)ₘNR³R⁴, piperazine, or a diamine containing a piperazine ring.

Examples of the linear or branched alkyl group having 1 to 5 carbon atoms represented by R¹ to R⁴ include ones having 1 to 5 carbon atoms of the alkyl groups provided as specific examples of the alkyl group represented by Z¹ and Z². Examples of the diamine containing a piperazine ring include compounds resulting from substitution with an alkyl group (preferably having 1 to 5 carbon atoms) at at least one position of 2-, 3-, 5-, and 6-positions of piperazine; and compounds resulting from substitution of the amino group located at 1- and/or 4-position of piperazine with an alkyl group (preferably having 1 to 5 carbon atoms) substituted with an amino group.

Specific examples of the diamine represented by Y¹ in the general formula (3) include N,N,N',N'-tetramethyldiaminomethane, ethylenediamine, N,N'-dimethylethylenediamine, N,N'-diethylethylenediamine, N,N-dimethylethylenediamine, N,N-diethylethylenediamine, N,N,N',N'-tetramethylethylenediamine, N,N,N',N'-diethylethylenediamine, tetramethylenediamine, 1,2-propanediamine, 1,3-propanediamine, tetramethylenediamine, pentamethylenediamine, hexamethylenediamine, 1,7-diaminoheptane, 1,8-diaminooctane, 1,9-diaminononane, 1,10-diaminodecane, piperazine, trans-2,5-dimethylpiperazine, 1,4-bis(2-aminoethyl)piperazine, and 1,4-bis(3-aminopropyl)piperazine, and commercial products may be used as all of these compounds.

Of the (poly)phosphate compounds represented by the general formula (3), salts of (poly)phosphoric acid with piperazine, i.e., piperazine orthophosphate, piperazine pyrophosphate, and piperazine polyphosphate are preferred as the component (B). Of these, a piperazine polyphosphate, represented by the general formula (3) in which q is 1 and Y¹ is piperazine, especially piperazine pyrophosphate, is preferred from the viewpoint of flame retardancy.

The salt of (poly)phosphoric acid with piperazine, for example, in the case of piperazine pyrophosphate, can be easily obtained in the form of a precipitate having low water solubility by reacting piperazine with pyrophosphoric acid in water or methanol aqueous solution. In the use of a piperazine polyphosphate, there can be used a salt obtained from piperazine and polyphosphoric acid consisting of a mixture of orthophosphoric acid, pyrophosphoric acid, tripolyphosphoric acid, and other polyphosphoric acids. In this case, the composition of the (poly)phosphoric acid, which is a raw material, is not particularly limited.

In the flame retardant polyolefin resin composition of the present invention, the content of the component (A) is preferably 1 to 40% by mass from the viewpoint of flame retardancy, more preferably 3 to 30% by mass, even more preferably 6 to 20% by mass, and most preferably 8 to 18% by mass.

The content of the component (B) is preferably 1 to 50% by mass from the viewpoint of flame retardancy, more preferably 5 to 40% by mass, even more preferably 8 to 30% by mass, and most preferably 12 to 25% by mass.

In the flame retardant polyolefin resin composition of the present invention, the total content of the components (A) and (B), which are flame retardant components, is preferably 15 to 50% by mass, more preferably 20 to 40% by mass, even more preferably 30 to 40% by mass, and most preferably 32 to 38% by mass. If the total content is less than 15% by mass, sufficient flame retarding effect cannot be obtained, whereas if it is greater than 50% by mass, the properties of the resin may be deteriorated.

From the viewpoint of flame retardancy, the content ratio (mass basis) of the component (A) to the component (B) is preferably (A)/(B) = 20/80 to 50/50, more preferably (A)/(B) = 30/70 to 50/50, and even more preferably (A)/(B) = 35/65 to 45/55.

Preferably, the flame retardant polyolefin resin composition of the present invention further contains zinc oxide which is a flame retardant component as a component (C). The zinc oxide may have been surface treated. Commercial products such as Zinc Oxide Grade 1 (produced by Mitsui Mining & Smelting Co., Ltd.), partially coated type Zinc Oxide (produced by Mitsui Mining & Smelting Co., Ltd.), NANO FINE 50 (ultrafine particle zinc oxide with an average particle diameter of 0.02 µm; produced by Sakai Chemical Industry Co., Ltd.), and NANO FINE K (ultrafine particle zinc oxide coated with zinc silicate having an average particle diameter of 0.02 µm; produced by Sakai Chemical Industry Co., Ltd.) can be used as the zinc oxide. The content of zinc oxide as the component (C) is more preferably 0.5 to 10% by mass, and more preferably 1.2 to 5% by mass.

Preferably, the flame retardant polyolefin resin composition of the present invention further contains an anti-drip agent as a component (D). Examples of the anti-drip agent include fluorine-containing anti-drip agents, silicon rubbers, and layered silicates.

Examples of the layered silicates include smectite clay minerals such as montmorillonite, saponite, hectorite, beidellite, stevensite, and nontronite; vermiculite, halloysite, swellable mica, and talc; those in which an organic cation, a quaternary ammonium cation, or a phosphonium cation has been intercalated between layers may be used.

Of the anti-drip agents of the component (D), fluorine-containing anti-drip agents are preferred; specific examples of the fluorine-containing anti-drip agents include fluororesins such as polytetrafluoroethylene, polyvinylidene fluoride, and polyhexafluoropropylene, and alkali metal perfluoroalkanesulfonate compounds or alkaline earth metal perfluoroalkanesulfonate compounds such as sodium perfluoromethanesulfonate, potassium perfluoro-n-butanesulfonate, potassium perfluoro-tert-butanesulfonate, sodium perfluorooctane sulfonate, and calcium perfluoro-2-ethylhexanesulfonate. Of the above-mentioned fluorine-containing anti-drip agents, polytetrafluoroethylene is most preferred from the viewpoint of anti-dripping property.

The content of the anti-drip agent of the component (D) is preferably 0.01 to 5% by mass, more preferably 0.05 to 3% by mass, and even more preferably 0.1 to 1% by mass. If the content is less than 0.01% by mass, the anti-dripping effect is not sufficient, whereas if it is greater than 5% by mass, the properties of the resin may be deteriorated.

The flame retardant polyolefin resin composition to be used for the present invention can be prepared just by incorporating the above-described components (A) and (B) in a polyolefin resin and it is preferable to further incorporate the above-described component (C) and/or the component (D). The timing of incorporating the components (A) to (D) into the polyolefin resin is not particularly limited; for example, two or more components selected from the components (A) to (D) may be combined into one portion in advance and then incorporated to the polyolefin resin or alternatively each component may be incorporated separately into the polyolefin resin. In the case of combining into one portion, each component may be mixed after being crushed respectively or may be crushed after being mixed.

Silicone oil may be incorporated in the flame retardant polyolefin resin -composition of the present invention in order to inhibit secondary aggregation during the incorporation and improve water resistance. Examples of the silicone oil include dimethyl silicone oil in which the side chains and the terminals of polysiloxane are all methyl groups, methylphenyl silicone oil in which some of the side chains of polysiloxane are phenyl groups, methyl hydrogen silicone oil in which some of the side chains of polysiloxane are hydrogen, and copolymers thereof, and amine-modified, epoxy-modified, alicyclic epoxy-modified, carboxyl-modified, carbinol-modified, mercapto-modified, polyether-modified, long chain alkyl-modified, fluoroalkyl-modified, higher fatty acid ester-modified, higher fatty acid amide-modified, and silanol-modified, diol-modified, phenol-modified and/or aralkyl-modified silicone oils prepared by introducing organic groups to some of the side chains and/or the terminals of those silicone oils may also be used.

Specific examples of the silicone oil include KF-96 (produced by Shin-Etsu Chemical Co., Ltd.), KF-965 (produced by Shin-Etsu Chemical Co., Ltd.), and KF-968 (produced by Shin-Etsu Chemical Co., Ltd.) as dimethylsilicone oil; KF-99 (produced by Shin-Etsu Chemical Co., Ltd.), KF-9901 (produced by Shin-Etsu Chemical Co., Ltd.), HMS-151 (produced by Gelest, Inc.), HMS-071 (produced by Gelest, Inc.), HMS-301 (produced by Gelest, Inc.), and DMS-H21 (produced by Gelest, Inc.) as methylhydrogen silicone oil or silicone oil having a methylhydrogen polysiloxane structure; KF-50 (produced by Shin-Etsu Chemical Co., Ltd.), KF-53 (produced by Shin-Etsu Chemical Co., Ltd.), KF-54 (produced by Shin-Etsu Chemical Co., Ltd.), and KF-56 (produced by Shin-Etsu Chemical Co., Ltd.) as examples of methylphenyl silicone oil; X-22-343 (produced by Shin-Etsu Chemical Co., Ltd.), X-22-2000 (produced by Shin-Etsu Chemical Co., Ltd.), KF-101 (produced by Shin-Etsu Chemical Co., Ltd.), KF-102 (produced by Shin-Etsu Chemical Co., Ltd.), and KF-1001 (produced by Shin-Etsu Chemical Co., Ltd.) as examples of an epoxy-modified product; X-22-3701E (produced by Shin-Etsu Chemical Co., Ltd.) as an example of a carboxyl-modified product; X-22-4039 (produced by Shin-Etsu Chemical Co., Ltd.) and X-22-4015 (produced by Shin-Etsu Chemical Co., Ltd.) as examples of a carbinol-modified product; and KF-393 (produced by Shin-Etsu Chemical Co., Ltd.) as an amine-modified product.

A silane coupling agent may be incorporated in the flame retardant polyolefin resin composition of the present invention. The silane coupling agent is a compound that has a hydrolytic group along with an organic functional group and is represented, for example, by a general formula A-(CH₂)ₖ-Si(OR)₃. A is an organic functional group, k represents number of from 1 to 3, and R represents a methyl group or an ethyl group. Examples of the organic group of A include an epoxy group, a vinyl group, a methacryl group, an amino group, a mercapto group, etc. As the silane coupling agent to be used for the present invention, ones having an epoxy group are particularly preferred.

Moreover, preferably, a lubricant is, as necessary, incorporated in the flame retardant polyolefin resin composition of the present invention. Examples of such a lubricant include pure hydrocarbon lubricants such as liquid paraffin, natural paraffin, microwax, synthetic paraffin, low molecular weight polyethylene, and polyethylene wax; halogenated hydrocarbon lubricants; fatty acid lubricants such as higher fatty acid, and oxy fatty acid; fatty acid amide lubricants such as fatty acid amide and bis fatty acid amide; ester lubricants such as lower alcohol esters of fatty acids, polyalcohol esters of fatty acids like glyceride, polyglycol esters of fatty acids and fatty alcohol esters of fatty acids (ester wax); metal soaps, fatty alcohols, polyhydric alcohols, polyglycol, polyglycerol, partial esters made of fatty acids and polyhydric alcohols, partial ester lubricants made of fatty acids and polyglycols or polyglycerols, (meth)acrylic acid ester copolymers, silicone oil, and mineral oil.

The loading of the lubricant in the present invention is preferably 0.01 to 5% by mass, and more preferably 0.1 to 1% by mass.

Preferably, the flame retardant polyolefin resin composition of the present invention is stabilized, as necessary, by the incorporation of a phenolic antioxidant, a phosphorus-based antioxidant, a thioether antioxidant, an ultraviolet absorber, a hindered amine light stabilizer, an anti-aging agent, or the like.

Examples of the phenolic antioxidant include 2,6-di-tert-butyl-p-cresol, 2,6-diphenyl-4-octadecyloxyphenol, distearyl(3,5-di-tert-butyl-4-hydroxybenzyl)phosphonate, 1,6-hexamethylenebis[(3,5-di-tert-butyl-4-hydroxyphenyl)propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl(3,5-di-tert-butyl-4-hydroxyphenyl)propionate, tetrakis[3-(3,5-di-tert-butyl-4-hydroxyphenyl)methyl propionate]methane, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl)phenyl]terephthalat e, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy} ethyl]-2 ,4,8,10-tetraoxaspiro[5,5]undecane, and triethylene glycol bis[(3-tert-butyl-4-hydroxy-5-methylphenyl)propionate].

The loading of such a phenolic antioxidant is preferably 0.001 to 5% by mass, and more preferably 0.05 to 3% by mass.

Examples of the phosphorus-based antioxidant include trisnonylphenylphosphite, tris[2-tert-butyl-4-(3-tert-butyl-4-hydroxy-5-methylphenylthio)-5-methylphenyl]phosph ite, tridecylphosphite, octyldiphenylphosphite, di(decyl)monophenylphosphite, di(tridecyl)pentaerythritoldiphosphite, di(nonylphenyl)pentaerythritoldiphosphite, bis(2,4-di-tert-butylphenyl)pentaerythritoldiphosphite, bis(2,6-di-tert-butyl-4-methylphenyl)pentaerythritoldiphosphite, bis(2,4,6-tri-tert-butylphenyl)pentaerythritoldiphosphite, bis(2,4-dicumylphenyl)pentaerythritoldiphosphite, tetra(tridecyl)isopropylidenediphenoldiphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butanetriphosphite, tetrakis(2,4-di-tert-butylphenyl)biphenylenediphosphonate, 9,10-dihydro-9-oxa-10-phosphaphenanthrene-10-oxide, 2,2'-methylenebis(4,6-di-tert-butylphenyl)-2-ethylhexylphosphite, 2,2'-methylenebis(4,6-di-tert-butylphenyl)-octadecylphosphite, 2,2'-ethylidenebis(4,6-di-tert-butylphenyl)fluorophosphite, tris(2-[(2,4,8,10-tetrakis tert-butylbenzo[d,f][1,3,2]dioxaphosphepin-6-yl)oxy]ethyl)amine, and a phosphite of 2-ethyl-2-butylpropylene glycol with 2,4,6-tri-tert-butylphenol. The loading of such a phosphorus-based antioxidant is preferably 0.001 to 5% by mass, and more preferably 0.05 to 3% by mass.

Examples of the thioether antioxidant include dialkyl thiodipropionates such as dilauryl thiodipropionate, dimyristyl thiodipropionate, and distearyl thiodipropionate, and pentaerythritol tetra(β-alkylmercaptopropionic) acid esters. The loading of such a thioether antioxidant is preferably 0.001 to 5% by mass, and more preferably 0.05 to 3% by mass.

Examples of the ultraviolet absorber include 2-hydroxybenzophenones such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, 2,2'-methylenebis(4-tert-octyl-6-(benzotriazolyl)phenol), and 2-(2'-hydroxy-3'-tert-butyl-5'-carboxyphenyl)benzotriazole; benzoates such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and triaryltriazines such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis(2,4-di-tert-butylphenyl)-s-triazine. The loading of the ultraviolet absorber is preferably 0.001 to 5% by mass, and more preferably 0.05 to 3% by mass.

Examples of the hindered amine light stabilizer include hindered amine compounds such as 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butane tetracarboxylate, tetrakis(1,2,2,6,6-pentamethyl-4-piperidyl)-1,2,3,4-butane tetracarboxylate, bis(2,2,6,6-tetramethyl-4-piperidyl)•di(tridecyl)-1,2,3,4-butane tetracarboxylate, bis(1,2,2,6,6-pentamethyl-4-piperidyl)•di(tridecyl)-1,2,3,4-butane tetracarboxylate, bis(1,2,2,4,4-pentamethyl-4-piperidyl)-2-butyl-2-(3,5-di-tert-butyl-4-hydroxybenzyl)ma lonate, a 1-(2-hydroxyethyl)-2,2,6,6-tetramethyl-4-piperidynol/diethyl succinate polycondensate, a 1,6-bis(2,2,6,6-tetramethyl-4-piperidylamino)hexane/2,4-dichloro-6-morpholino-s-triazi ne polycondensate, a 1,6-bis(2,2,6,6-tetramethyl-4-piperidylamino)hexane/2,4-dichloro-6-tert-octylamino-s-tr iazine polycondensate, 1,5,8,12-tetrakis[2,4-bis(N-butyl-N-(2,2,6,6-tetramethyl-4-piperidyl)amino)-s-triazin-6-yl]-1,5,8,12-tetraazadodecane, 1,5,8,12-tetrakis[2,4-bis(N-butyl-N-(1,2,2,6,6-pentamethyl-4-piperidyl)amino)-s-triazin -6-yl]-1,5,8,12-tetraazadodecane, 1,6,11-tris[2,4-bis(N-butyl-N-(2,2,6,6-tetramethyl-4-piperidyl)amino)-s-triazin-6-yl]ami noundecane, 1,6,11-tris[2,4-bis(N-butyl-N-(1,2,2,6,6-pentamethyl-4-piperidyl)amino)-s-triazin-6-yl]a minoundecane. The loading of such a hindered amine light stabilizer is preferably 0.001 to 5% by mass, and more preferably 0.05 to 3% by mass.

Examples of the anti-aging agent include naphthylamines, diphenylamines, p-phenyldiamines, quinolines, hydroquinone derivatives, monophenols, thiobisphenols, hindered phenols, and phosphite esters. The loading of such an anti-aging agent is preferably 0.001 to 5% by mass, and more preferably 0.05 to 3% by mass.

In the flame retardant polyolefin resin composition of the present invention, a reinforcing agent may be incorporated as an optional component to such an extent that the effects of the present invention are not impaired. Fibrous, plate-like, granular, or powdery reinforcing agents to be used generally for reinforcing synthetic resin can be used as the reinforcing agent. Specific examples thereof include inorganic fibrous reinforcing agents such as glass fiber, asbestos fiber, carbon fiber, graphite fiber, metal fiber, potassium titanate whisker, aluminum borate whisker, magnesium whisker, silicon whisker, wollastonite, sepiolite, asbestos, slag fiber, zonolite, ellestadite, plaster fiber, silica fiber, silica alumina fiber, zirconia fiber, boron nitride fiber, silicon nitride fiber and boron fiber; organic fibrous reinforcing agents such as polyester fiber, nylon fiber, acrylic fiber, regenerated cellulose fiber, acetate fiber, kenaf, ramie, cotton, jute, hemp, sisal, flax, linen, silk, hemp of Manila, sugarcane, wooden pulp, waste paper, used paper and wool; plate-like and granular reinforcing agents such as glass flake, non-swellable mica, graphite, metal foil, ceramic beads, clay, mica, sericite, zeolite, bentonite, dolomite, kaolin, fine powder silicic acid, feldspathic powder, potassium titanate, shirasu balloon, calcium carbonate, magnesium carbonate, barium sulfate, calcium oxide, aluminum oxide, titanium oxide, aluminum silicate, silicon oxide, plaster, novaculite, dawsonite and white clay. These reinforcing agents may have been coated or sizing-treated with a thermoplastic resin such as an ethylene/vinyl acetate copolymer or a thermosetting resin such as an epoxy resin, or alternatively may have been treated with a coupling agent such as amino silane and epoxy silane.

In the flame retardant polyolefin resin composition of the present invention, a crystal nucleating agent may further be incorporated as an optional component to such an extent that the effects of the present invention are not impaired. As the crystal nucleating agent, one that has generally been used as a crystal nucleating agent for polymers may be used as appropriate; in the present invention, either of an inorganic crystal nucleating agent or an organic crystal nucleating agent can be used.

Specific examples of the inorganic crystal nucleating agent can include metal salts such as kaolinite, synthesized mica, clay, zeolite, silica, graphite, carbon black, magnesium oxide, titanium oxide, calcium sulfide, boron nitride, calcium carbonate, barium sulfate, aluminum oxide, neodymium oxide, and phenyl phosphonate. These inorganic crystal nucleating agents may have been modified with an organic substance in order to improve the dispersibility in the composition.

Specific examples of the organic nucleating agent can include metal salts of organic carboxylic acids such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium β-naphthalate, and sodium cyclohexanecarboxylate, salts of organic sulfonic acids, such as sodium p-toluenesulfonate and sodium sulfoisophthalate, carboxylic amides such as stearamide, ethylenebislauramide, palmitamide, hydroxystearamide, erucamide, and trimesic acid tris(tert-butyramide), benzylidenesorbitol and its derivatives, metal salts of phosphorus compounds such as sodium-2,2'-methylenebis(4,6-di-tert-butylphenyl)phosphate, and 2,2-methylbis(4,6-di-tert-butylphenyl)sodium.

In the flame retardant polyolefin resin composition of the present invention, a plasticizer may be incorporated as an optional component to such an extent that the effects of the present invention are not impaired. As the plasticizer, ones that are generally used as plasticizers for polymers can be used as appropriate, and examples thereof can include polyester plasticizers, glycerin plasticizers, multivalent carboxylic acid ester plasticizers, polyalkylene glycol plasticizers, and epoxy plasticizers.

Specific examples of the polyester plasticizers can include polyesters composed of acid components such as adipic acid, sebacic acid, terephthalic acid, isophthalic acid, naphthalenedicarboxylic acid, diphenyldicarboxylic acid and rosin, and diol components such as propylene glycol, 1,3-butanediol, 1,4-butanediol, 1,6-hexanediol, ethylene glycol, and diethylene glycol, and polyesters composed of a hydroxycarboxylic acid such as polycaprolactone. These polyesters may be terminated with monofunctional carboxylic acids or monofunctional alcohols, or may be terminated with epoxy compounds.

Specific examples of the glycerin plasticizers can include glycerin monoacetomonolaurate, glycerin diacetomonolaurate, glycerin monoacetomonostearate, glycerin diacetomonooleate, and glycerin monoacetomonomontanate.

Specific examples of the multivalent carboxylic acid ester plasticizer can include phthalates such as dimethyl phthalate, diethyl phthalate, dibutyl phthalate, dioctyl phthalate, diheptyl phthalate, dibenzyl phthalate, and butyl benzyl phthalate; trimellitates such as tributyl trimellitate, trioctyl trimellitate, and trihexyl trimellitate; adipates such as diisodecyl adipate, n-octyl-n-decyl adipate, methyl diglycol butyl diglycol adipate, benzyl methyl diglycol adipate, and benzyl butyl diglycol adipate; citrates such as triethyl acetylcitrate and tributyl acetylcitrate; azelates such as di-2-ethylhexyl azelate; sebacates such as dibutyl sebacate and di-2-ethylhexyl sebacate.

Specific examples of the polyalkylene glycol plasticizers can include polyethylene glycol, polypropylene glycol, a poly(ethylene oxide•propylene oxide) block copolymer and/or random copolymer; polytetramethylene glycol; polyalkylene glycols such as ethylene oxide addition polymers of bisphenols, propylene oxide addition polymers of bisphenols, and tetrahydrofuran addition polymers of bisphenols; or terminal-blocked compounds thereof such as terminal epoxy-modified compounds, terminal ester-modified compounds, and terminal ether-modified compounds.

The aforementioned epoxy plasticizer generally indicates epoxy triglyceride composed of epoxy alkyl stearate and soy bean oil, etc.; in the present invention, so-called epoxy resins mainly prepared from raw materials, bisphenol A and epichlorohydrin may also be used.

Specific examples of other plasticizers can include benzoates of aliphatic polyols such as neopentylglycol dibenzoate, diethylene glycol dibenzoate, and triethylene glycol di-2-ethylbutyrate, fatty acid amides such as stearamide, aliphatic carboxylic acid esters such as butyl oleate, oxyacid esters such as methyl acetylricinolate and butyl acetylricinolate, pentaerythritol, sorbitols, polyacrylates, and paraffins.

When a plasticizer is used in the present invention, only one of the plasticizers may be used or alternatively two or more of the plasticizers may be used in combination.

For the flame retardant polyolefin resin composition of the present invention, one or more organic or inorganic flame retardant or flame retardant aid containing no halogen may further be used as necessary to such an extent that the effects of the present invention are not impaired. Examples of the flame retardant and the flame retardant aid include triazine ring-containing compounds, metal hydroxides, phosphoric acid ester flame retardants, condensed phosphoric acid ester flame retardants, phosphate flame retardants, inorganic phosphorus-containing flame retardants, dialkyl phosphinates, silicone flame retardants, metal oxides, boric acid compounds, swellable graphite, other inorganic flame retardant aids, pentaerythritol, and other organic flame retardants.

Examples of the triazine ring-containing compound include melamine, ammeline, benzoguanamine, acetoguanamine, phthalodiguanamine, melamine cyanurate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

Examples of the metal hydroxides include magnesium hydroxide, aluminum hydroxide, calcium hydroxide, barium hydroxide, zinc hydroxide, and Kisuma 5A (the trademark of magnesium hydroxide produced by Kyowa Chemical Industry Co., Ltd).

Examples of the phosphoric acid ester flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyldiphenyl phosphate, xylenyldiphenyl phosphate, trisisopropylphenyl phosphate, 2-ethylhexyldiphenyl phosphate, tert-butylphenyldiphenyl phosphate, bis-(tert-butylphenyl)phenyl phosphate, tris-(tert-butylphenyl)phosphate, isopropylphenyldiphenyl phosphate, bis-(isopropylphenyl)diphenyl phosphate, and tris-(isopropylphenyl)phosphate.

Examples of the condensed phosphoric acid ester flame retardants include 1,3-phenylene bis(diphenylphosphate), 1,3-phenylene bis(dixylenylphosphate), and bisphenol A bis(diphenylphosphate).

Examples of the inorganic phosphorus-containing flame retardant include red phosphorus.

Examples of the dialkyl phosphinates include aluminum diethylphosphinate and zinc diethylphosphinate.

Examples of the other inorganic flame retardant aids include inorganic compounds such as titanium oxide, aluminum oxide, magnesium oxide, and hydrotalcite, and their surface-treated products. Specifically, various commercial products such as TIPAQUE R-680 (the trademark of titanium oxide produced by Ishihara Sangyo Kaisha, Ltd.), Kyowa MAG 150 (the trademark of magnesium oxide produced by Kyowa Chemical Industry Co., Ltd), DHT-4A (hydrotalcite produced by Kyowa Chemical Industry Co., Ltd), and Alkamiser 4 (the trademark of zinc-modified hydrotalcite produced by Kyowa Chemical Industry Co., Ltd) can be used.

In the flame retardant polyolefin resin composition of the present invention, additives usually used for synthetic resins, such as crosslinking agents, antistatic agents, metal soaps, fillers, clouding inhibitors, plate-out inhibitors, surface treatment agents, fluorescent agents, antifungal agents, sterilizers, foaming agents, metal deactivators, mold release agents, pigments, and processing aids may be incorporated as necessary to such an extent that the effects of the present invention are not impaired.

In the case of incorporating optional components other than the above-described components (A) to (D) in the flame retardant polyolefin resin composition of the present invention, the loading thereof is not particularly limited as long as the effects of the present invention are not impaired, and it is preferably 40% by mass in total.

By molding the flame retardant polyolefin resin composition of the present invention, molded articles conforming to the UL94 5VA standard can be obtained. The molding method is not particularly restricted and examples thereof include extruding, calendering, injection molding, rolling, compression molding, and blow molding, and molded articles of various shapes such as resin plates, sheets, films, and profiles.

According to the flame retardant polyolefin resin composition of the present invention, it is possible to conform to UL94 5VA preferably at a thickness of 3.2 mm or less, and more preferably at a thickness of 1.6 mm or less.

The flame retardant polyolefin resin composition of the present invention can be used for such applications as housings (frames, bodies, exteriors, covers) or components of electric motorcars, machines, electric and electronic equipment, and OA equipment, and automobile interior or exterior materials and can be used for applications in which the UL94 5VA standard is required.

Specific examples include OA equipment such as printers, personal computers, word processors, keyboards, PDA (Personal Digital Assistant), telephone machines, copy machines, facsimile machines, and ECR (electronic cash registers); household electric appliances such as laundry machines, refrigerators, vacuum cleaners, microwave ovens, lighting equipment, game machines, iron and kotatsu; audio and visual equipments such as television, video tape recorders, video cameras, radio cassette players, tape recorders, mini discs, CD players, speakers, and liquid crystal displays, and housings and components thereof. Further examples include electric and electronic components and communication devices such as connectors, relays, capacitors, switches, printed boards, coil bobbins, semiconductor sealing materials, LED sealing materials, electric wire, cables, transformers, deflecting yokes, distribution boards, and clocks. The composition is preferably used also for high voltage housings, hybrid vehicles, and electric motorcars applications.

### EXAMPLES

The present invention will be described in detail by way of examples and comparative examples. The present invention, however, is not limited in any way by the examples.

### [Examples 1 to 15] Production and evaluation of flame retardant polyolefin resin compositions

Flame retardant polyolefin resin compositions were prepared by incorporating the components listed in Table 1 or Table 2. Each of the resulting resin compositions was extruded at 220°C to produce pellets, and then injection molding was carried out using the pellets under conditions of a mold temperature of 50°C and a resin temperature of 220°C, affording a bar specimen having dimensions of 127 mm × 13 mm × 1.6 mm and a bar specimen having dimensions of 127 mm × 13 mm × 3.2 mm. On the other hand, press molding was carried out at 220°C using the same pellets, affording a plaque specimen having dimensions of 150 mm × 150 mm × 1.6 mm and a plaque specimen having dimensions of 150 mm × 150 mm × 3.2 mm.

### [Comparative Examples 1 to 9] Production and evaluation of comparative flame retardant polyolefin resin compositions

Comparative flame retardant polyolefin resin compositions were prepared in the same manner as in Examples 1 to 15 except that the components listed in Table 3 were used, and then comparative specimens were prepared from the resulting resin compositions.

Component (A) and Component (B) listed in Tables 1 to 3 were produced by the following methods.

### [Production Example 1]

### Component (A): melamine pyrophosphate

Produced by reacting pyrophosphoric acid and melamine in a molar ratio of 1:2.

### [Production Example 2]

### Component (B): piperazine pyrophosphate

Produced by reacting pyrophosphoric acid and piperazine in a molar ratio of 1:1.

For the specimens obtained in Examples or Comparative Examples, the flame retardancy test, the heat deflection temperature (HDT) test, and the Izod impact strength test described below were carried out. The results are shown in Table 1 to Table 3. The formulations shown in Table 1 to Table 3 are all on the mass basis.

### <Flame Retardancy Test>

For the 1.6 mm specimens and the 3.2 mm specimens prepared as above, a bar test and a plaque test were carried out as flame retardancy evaluations in accordance with the UL94 5V standard of flame retardancy. 5VA is superior to 5VB in flame retardancy, and the case in that neither 5VA nor 5VB was achieved is designated by not-5V.

### <Heat Deflection Temperature (HDT)>

Using the pellets prepared as above, injection molding was carried out under conditions of a mold temperature of 50°C and a resin temperature of 220°C to prepare a specimen sized 80 × 10 × 4 mm, whose heat deflection temperature (°C) was then measured in accordance with ISO75 (load: 0.45 MPa).

### <Charpy Impact Strength>

Impact resistance was examined under room temperature conditions in accordance with ISO179.

**[Table 1]**

| Formulation | | Example | | | | | | | | | |
|---|---|---|---|---|---|---|---|---|---|---|---|
| | | 1 | 2 | 3 | 4 | 5 | 6 | 7 | 8 | 9 | 10 |
| Polypropylene ^{*1} | | 64.4 | 67.9 | 62.65 | 74.2 | 69.2 | 64.2 | 78.4 | 72.95 | 67.7 | 62.45 |
| Phenolic antioxidant ^{*2} | | 0.1 | 0.1 | 0.1 | 0.1 | 0.1 | 0.1 | 0.1 | 0.1 | 0.1 | 0.1 |
| Phosphorus-based antioxidant ^{*3} | | 0.1 | 0.1 | 0.1 | 0.1 | 0.1 | 0.1 | 0.1 | 0.1 | 0.1 | 0.1 |
| Lubricant ^{*4} | | 0.1 | 0.1 | 0.1 | 0.1 | 0.1 | 0.1 | 0.1 | 0.1 | 0.1 | 0.1 |
| Lubricant ^{*5} | | 0.3 | 0.3 | 0.3 | 0.3 | 0.3 | 0.3 | 0.3 | 0.3 | 0.3 | 0.3 |
| Component (A) Melamine pyrophosphate | | 14 | 12 | 14 | 10 | 12 | 14 | 8 | 10 | 12 | 14 |
| Component (B) Piperazine pyrophosphate | | 21 | 18 | 21 | 15 | 18 | 21 | 12 | 15 | 18 | 21 |
| Component (C) Zinc oxide | | | 1.5 | 1.75 | | | | 1.0 | 1.25 | 1.5 | 1.75 |
| Component (D) Polytetrafluoroethylene | | | | | 0.2 | 0.2 | 0.2 | 0.2 | 0.2 | 0.2 | 0.2 |
| Flame retardancy test | 1.6 mm | not-5V | not-5V | not-5V | not-5V | not-5V | 5VA | not-5V | not-5V | not-5V | 5VA |
| | 3.2 mm | 5VA | 5VA | 5VA | 5VA | 5VA | 5VA | 5VA | 5VA | 5VA | 5VA |
| HDT (°C) | | 102 | 96 | 98 | 109 | 108 | 111 | 106 | 106 | 105 | 111 |
| Charpy impact strength (kJ/m²) | | 3.2 | 2.1 | 2.4 | 3.2 | 2.9 | 2.7 | 3.7 | 2.9 | 2.5 | 2.4 |

| | | | | | | | | | | | |
|---|---|---|---|---|---|---|---|---|---|---|---|
| *1: Polypropylene, melt flow rate = 8 g/10 min *2: Tetrakis[3-(3,5-di-tert-butyl-4-hydroxyphenyl)propyonyloxymethyl]methane (ADK STAB AO-60 produced by ADEKA CORPORATION) *3: Tris(2,4-di-tert-butylphenyl)phosphite (ADK STAB 2112 produced by ADEKA CORPORATION) *4: Calcium stearate *5: Glycerin monostearate | | | | | | | | | | | |

**[Table 2]**

| Formulation | | Example | | | | |
|---|---|---|---|---|---|---|
| | | 11 | 12 | 13 | 14 | 15 |
| Polypropylene ^{*1} | | 64.4 | 62.65 | 62.45 | 62.65 | 62.45 |
| Phenolic antioxidant ^{*2} | | 0.1 | 0.1 | 0.1 | 0.1 | 0.1 |
| Phosphorus-based antioxidant ^{*3} | | 0.1 | 0.1 | 0.1 | 0.1 | 0.1 |
| Lubricant ^{*4} | | 0.1 | 0.1 | 0.1 | 0.1 | 0.1 |
| Lubricant ^{*5} | | 0.3 | 0.3 | 0.3 | 0.3 | 0.3 |
| Component (A) Melamine pyrophosphate | | 10.5 | 10.5 | 10.5 | 17.5 | 17.5 |
| Component (B) Piperazine pyrophosphate | | 24.5 | 24.5 | 24.5 | 17.5 | 17.5 |
| Component (C) Zinc oxide | | | 1.75 | 1.75 | 1.75 | 1.75 |
| Component (D) Polytetrafluoroethylene | | | | 0.2 | | 0.2 |
| Flame retardancy test | 1.6 mm | not-5V | not-5V | not-5V | not-5V | 5VA |
| | 3.2 mm | 5VA | 5VA | 5VA | 5VA | 5VA |
| HDT (°C) | | 99 | 100 | 107 | 101 | 108 |
| Charpy impact strength (kJ/m²) | | 2.6 | 2.4 | 2.6 | 2.4 | 2.4 |

| | | | | | | |
|---|---|---|---|---|---|---|
| *1: Polypropylene, melt flow rate = 8 g/10 min *2: Tetrakis[3-(3,5-di-tert-butyl-4-hydroxyphenyl)propyonyloxymethyl]methane (ADK STAB AO-60 produced by ADEKA CORPORATION) *3: Tris(2,4-di-tert-butylphenyl)phosphite (ADK STAB 2112 produced by ADEKA CORPORATION) *4: Calcium stearate *5: Glycerin monostearate | | | | | | |

**[Table 3]**

| Formulation | | Comparative Example | | | | | | | | |
|---|---|---|---|---|---|---|---|---|---|---|
| | | 1 | 2 | 3 | 4 | 5 | 6 | 7 | 8 | 9 |
| Polypropylene ^{*1} | | 99.4 | 64.4 | 64.4 | 62.65 | 62.65 | 62.2 | 62.2 | 62.45 | 62.45 |
| Phenolic antioxidant ^{*2} | | 0.1 | 0.1 | 0.1 | 0.1 | 0.1 | 0.1 | 0.1 | 0.1 | 0.1 |
| Phosphorus-based antioxidant ^{*3} | | 0.1 | 0.1 | 0.1 | 0.1 | 0.1 | 0.1 | 0.1 | 0.1 | 0.1 |
| Lubricant ^{*4} | | 0.1 | 0.1 | 0.1 | 0.1 | 0.1 | 0.1 | 0.1 | 0.1 | 0.1 |
| Lubricant ^{*5} | | 0.3 | 0.3 | 0.3 | 0.3 | 0.3 | 0.3 | 0.3 | 0.3 | 0.3 |
| Component (A) Melamine pyrophosphate | | | 35.0 | | 35.0 | | 35.0 | | 35.0 | |
| Component (B) Piperazine pyrophosphate | | | | 35.0 | | 35.0 | | 35.0 | | 35.0 |
| Component (C) Zinc oxide | | | | | 1.75 | 1.75 | | | 1.75 | 1.75 |
| Component (D) Polytetrafluoroethylene | | | | | | | 0.2 | 0.2 | 0.2 | 0.2 |
| Flame retardancy test | 1.6 mm | not-5V | not-5V | not-5V | not-5V | not-5V | not-5V | not-5V | not-5V | not-5V |
| | 3.2 mm | not-5V | not-5V | not-5V | not-5V | not-5V | not-5V | not-5V | not-5V | not-5V |
| HDT (°C) | | 77 | 98 | 100 | 99 | 99 | 106 | 105 | 108 | 108 |
| Charpy impact strength (kJ/m²) | | 6.1 | 2.4 | 2.5 | 2.5 | 2.4 | 2.7 | 2.6 | 2.6 | 2.5 |

| | | | | | | | | | | |
|---|---|---|---|---|---|---|---|---|---|---|
| *1: Polypropylene, melt flow rate = 8 g/10 min *2: Tetrakis[3-(3,5-di-tert-butyl-4-hydroxyphenyl)propyonyloxymethyl]methane (ADK STAB AO-60 produced by ADEKA CORPORATION) *3: Tris(2,4-di-tert-butylphenyl)phosphite (ADK STAB 2112 produced by ADEKA CORPORATION) *4: Calcium stearate *5: Glycerin monostearate | | | | | | | | | | |

## Claims

1. A flame retardant polyolefin resin composition comprising the following components (A) and (B) as flame retardant components for a polyolefin resin and satisfying the UL94 5VA standard,
a component (A): a (poly)phosphate compound represented by the following general formula (1)
a component (B): a (poly)phosphate compound represented by the following general formula (3) 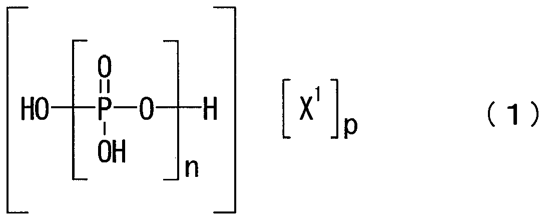 wherein n represents a number of 1 to 100, X¹ represents ammonia or a triazine derivative represented by the following general formula (2), and p represents a number satisfying 0 < p ≤ n + 2, 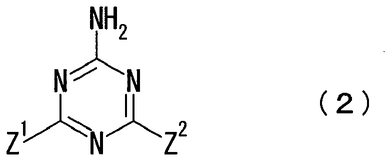 wherein Z¹ and Z² may be either the same or different and are each a group selected from the group consisting of an -NR⁵R⁶ group [wherein R⁵ and R⁶ may be either the same or different and are each a hydrogen atom, a linear or branched alkyl group having 1 to 6 carbon atoms, or a methylol group], a hydroxyl group, a mercapto group, a linear or branched alkyl group having 1 to 10 carbon atoms, a linear or branched alkoxy group having 1 to 10 carbon atoms, a phenyl group, and a vinyl group, 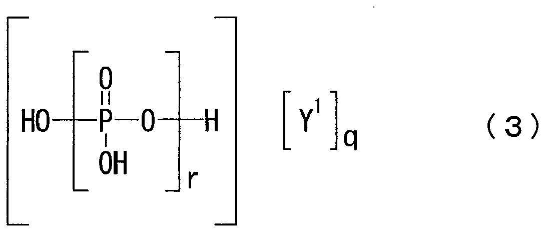 wherein r represents a number of 1 to 100, Y¹ represents [R¹R²N(CH₂)ₘNR³R⁴], piperazine, or a diamine having a piperazine ring, wherein R¹, R², R³, and R⁴ each represent a hydrogen atom or a linear or branched alkyl group having 1 to 5 carbon atoms and R¹, R², R³, and R⁴ may be either the same or different, m represents an integer of 1 to 10, and q represents a number satisfying 0 < q ≤ r + 2.

2. The flame retardant polyolefin resin composition according to claim 1, wherein the total content of the components (A) and (B) is 15 to 50% by mass.

3. The flame retardant polyolefin resin composition according to claim 1 or 2, further comprising zinc oxide as a component (C).

4. The flame retardant polyolefin resin composition according to any one of claims 1 to 3, further comprising an anti-drip agent as a component (D).

5. The flame retardant polyolefin resin composition according to claim 4, wherein the component (D) is polytetrafluoroethylene.

6. The flame retardant polyolefin resin composition according to any one of claims 1 to 5, using as the component (A) a melamine pyrophosphate of the general formula (1) wherein n is 2, p is 2, and X¹ is a melamine of the general formula (2) wherein Z¹ and Z² are each -NH₂.

7. The flame retardant polyolefin resin composition according to any one of claims 1 to 6, using as the component (B) a piperazine polyphosphate of the general formula (3) wherein q is 1 and Y¹ is piperazine.

8. The flame retardant polyolefin resin composition according to claim 7, wherein the piperazine polyphosphate is piperazine pyrophosphate.

9. The flame retardant polyolefin resin composition according to any one of claims 1 to 8, satisfying the UL94 5VA standard at a thickness of 3.2 mm or less.

10. The flame retardant polyolefin resin composition according to any one of claims 1 to 8, satisfying the UL94 5VA standard at a thickness of 1.6 mm or less.

11. A housing or component of an electric motorcar, a machine, and electric and electronic equipment obtained from the flame retardant polyolefin resin composition according to any one of claims 1 to 10.
